# EUROPEAN PATENT APPLICATION

(11) **EP 3 379 687 A1**
(43) Date of publication of application: **26.09.2018**
(21) Application number: 18162078.2
(22) Date of filing: 15.03.2018
(51) Int. Cl.: H02J 7/00, H01M 2/20, H01M 10/42

(54) **BATTERY PACKS AND CHARGERS, AND BATTERY PACK KIT FOR POWER TOOLS**

(30) Priority: 21.03.2017 CN 201710170066
(71) Applicant: TTI (Macao Commercial Offshore) Limited, Macao (MO)
(72) Inventor: Lee, Hei Man Raymond, Kwai Chung (HK); Li, Yong Min, Dongguan City (CN); Zheng, Yong Rui, Dongguan City (CN)
(74) Representative: Stevenson-Hill, Jack Patrick

(57) **Abstract**

A battery pack includes a housing and a plurality of battery units inside the housing. The battery pack further includes a USB Type-C interface disposed on the housing. Since many power supply devices that support the USB Type-C interface exist on the market, it is only convenient to use any such power supply device to charge the battery pack of the power tool in the present invention without considering any mechanical structure of the battery.

## Description

### Technical Field

The present invention is related to a portable power tool, and more particularly to a battery pack used together with the power tool and a charger cooperated therewith.

### Background Information

Portable power tools are usually used in all areas of the industry as well as in construction, garden care and housework. By configuring a rechargeable battery pack, the portable power tool can facilitate the operation to the user without being subject to any restrictions imposed by electronic wires, while also providing sufficient output power and ideal battery life for this operation.

However, a conventional battery pack of the power tool is designed to be charged only by using a dedicated battery charger that matches the form factor of the battery pack and a desired current/voltage provided for charging the charging the battery pack. Typically, such a battery charger is manufactured by the same manufacturer of the battery pack. Additionally, it is also desirable for the battery pack to provide the power to the external electronic device, such as smartphone or tablet computer, because the user of the power tool has at least one electronic device and this electronic device need to be charged at any time.

### SUMMARY

According to above background, an object of the present invention provides an alternative battery pack, so as to overcomes or at least mitigate the above technical problem.

The above object is achieved by a combination of the features of the independent claims; the dependent claims disclose other advantageous embodiments of the present invention.

Other objects of the invention will be apparent to those skilled in the art from the following description. Accordingly, the statements of the above objects are not intended to be exhaustive and are merely illustrative of some of many objects of the present invention.

Accordingly, in one aspect, the present invention provides battery pack, which includes a housing and a plurality of battery units inside the housing. The battery pack further includes a USB Type-C interface on the housing.

Preferably, the USB Type-C interface is electrically connected to the plurality of battery units, such that the plurality of battery units is adapted to be charged by receiving an external power through the USB Type-C interface.

In one changed embodiment, the USB Type-C interface is compatible with USB Power Delivery specification.

Preferably, the USB Type-C interface is adapted to supply a power within a voltage range of 5V to 20V.

In another changed embodiment, the USB Type-C interface uses a proprietary protocol to transmit a power, and the proprietary protocol allows the power with a voltage other than a range of 5V to 20V to be transmitted by the USB Type-C interface.

Preferably, the USB Type-C interface is adapted to supply a power within a voltage range of 4.2V to 60V.

In one specific embodiment, the USB Type-C interface is configured to communicate with an external device, so as to transmit an operation parameter and/or state of the battery pack.

In another specific embodiment, the battery pack is configured to use with a power tool and further includes a battery terminal electrically connected to the power tool.

According another aspect of the present invention, the present invention provides a battery charger, which includes a socket for receiving a power tool battery pack, wherein the battery charger further includes a USB Type-C interface.

In one changed embodiment, the USB Type-C interface is compatible with USB Power Delivery specification.

Preferably, the USB Type-C interface is adapted to supply a power within a voltage range of 5V to 20V.

In another changed embodiment, the USB Type-C interface uses a proprietary protocol to transmit a power, and the proprietary protocol allows the power with a voltage other than a range of 5V to 20V to be transmitted by the USB Type-C interface.

Preferably, the USB Type-C interface is adapted to supply a power within a voltage range of 4.2V to 60V.

According another aspect of the present invention, the present invention provides a battery pack kit for a power tool, which includes a battery pack mentioned above and a battery pack mentioned above.

The present invention has many advantages. By using the USB Power Delivery (PD) specification implemented on the USB Type-C interface, the battery pack equipped with the USB Type-C interface may be connected to external charger of the battery pack for charging - and an only requirement for the external charger is that it includes the same USB Type-C type interface as the battery pack. Since many power supply devices that support USB Type-C interface exist on the market, it is convenient to use any such power supply device to charge the battery pack of the power tool without considering any mechanical structure of the battery. This means that even if the external side of the power supply does not have a socket or a conventional charging terminal that is compatible with the shape of battery pack of the power tool, it has an incompatible socket/terminal or it is a power supply without any socket/terminal defined other than the USB Type-C interface, the power supply can still be used to charge the battery pack, since both of them have the USB Type-C interface. Even if a power supply is originally designed for a power adapter of a notebook computer or a tablet computer, as long as it supports the required charging voltage / current that is required by the USB Type-C interface, it may also be used for charging the battery pack of the power tool in the present invention.

Another advantage of the present invention is that based on the battery pack or charger of the power tool of the present invention, it may optionally support USB PD specification and/or a proprietary charging protocol for the battery pack of the power tool, and they are based on the hardware interface of the USB Type-C. Voltages, such as 5V (i.e. the voltage supported by traditional USB 1.1 or 2.0 port), 9V, 12V, 15V and 20V may be implemented based on the USB PD specification, and the voltages in the range of more than 5V to 20V, such as the 36V, 48V, 54V common to the field of the power tool, need to be implemented through the proprietary protocol because the current USB PD specification does not support these large voltage power delivery. However, the advantage of the present invention is that the USB TYPE-C interface with the same physical structure may be configured on the battery pack with different rated voltages, and a cable with identical USB Type-C type may be used for all of these battery packs and the corresponding power supply device thereof at the same time. The power supply device, such as the battery charger of the power tool, and the battery pack of the power tool may be adapted to the voltage required for the charging operation when their USB TYPE-C interfaces are connected to each other.

### BRIEF DESCRIPTION OF THE DRAWINGS

Further understanding of the performance and advantages of the present invention may be made with reference to the remainder of the specification and the accompanying drawings. The same components in the drawings are numbered the same. In some cases, a sub mark is placed after a reference number and a hyphen to represent one of many similar components. When referring to a reference number but does not specify a particular sub mark, it means all of these similar components.
FIG. 1 is a perspective view of a battery pack for a power tool according to an embodiment of the present invention.
FIG. 2 is a perspective view of a battery pack for a power tool according to another embodiment of the present invention.
FIG. 3 is a schematic view of the battery pack in FIG.1 connected to a battery charger in FIG.2 through a USB Type-C cable.
FIG. 4 is an appearance of a USB Type-C charger supporting a proprietary protocols according to another embodiment of the present invention.

In the drawings, similar reference numerals refer to similar parts throughout the embodiments described in this specification.

### DETAILED DESCRIPTION

As used herein and in the claims, "couple" or "connect" means that the electrical coupling or connection is directly or indirectly through one or more electrical devices, unless otherwise indicated.

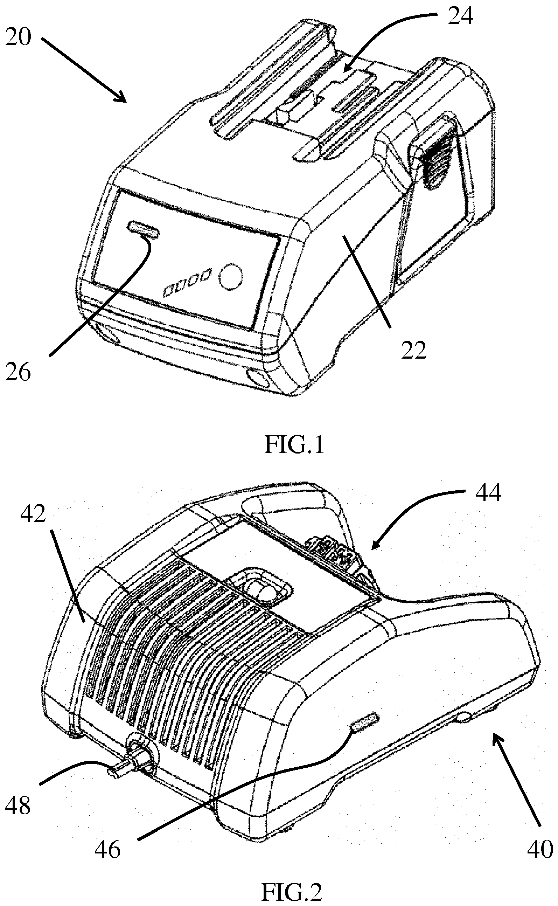

Refer to FIG.1. As shown in FIG. 1, a first embodiment of the present invention is used to a battery pack of a power tool, such as an electric drill, etc. The battery pack includes a housing 22 accommodating a plurality of battery units (not shown). The battery units are connected in series or parallel, so as to provide an output voltage and current needed for the whole battery pack 20. On one side of the housing 22, a physical interface 24 for the battery pack 20 may be used to detachably mount the battery pack 20 to a corresponding power tool or battery charger (not shown). The physical interface referred herein means that it has certain geometrical features that allow the battery pack 20 to be securely mounted on the corresponding power tool or battery charger and the battery terminal (not shown) for electrically connecting the battery pack 20 to the corresponding power tool or battery charger exists on the physical interface 24. Regardless of the geometric feature described above or the specific structure of the battery terminal, such as the type, size, arrangement of the battery terminal, etc., they are all based on specific standards. The battery pack 20 may be charged at a DC voltage less than or about 20V. For example, the battery pack may be charged at 21V.

It can be seen that a USB Type-C interface 26 serving as the USB TYPE-C interface of the battery pack 20 is further configured on the front side of the housing 22. The interface 26 is a recessed plug suitable to connect to an external male joint with USB Type-C standard. The USC Type-C is USB connector system that has 24 pins and may be completely anti-inserted, and the USC Type-C allows transmitting data and power. The USB Type-C interface 26 is coupled to the battery unit in the battery pack 20 via a USB PD controller (not shown). It is important that the USB Type-C interface 26 on the battery pack 20 supports the USB power delivery (PD) specification implemented on the USB Type-C interface for transmitting the voltage/current equal to or greater than that provided by a traditional USB standard, such as USB1.1 and USB2.0. For example, the version 2.0 of USB PD specification defines four standard voltage levels of 5V, 9V, 15V and 20V, respectively, and supports any maximum source output power of 0.5W to 100W. The USB Type-C interface specification and the USB PD specification are well known in the related field and will not be described in further detail herein.

In addition to the above standardized USB PD specification, the battery pack 20 further supports a proprietary protocol and an associated controller thereof(not shown). The controller can be a component independent of the USB PD controller or a unique controller compatible with both the USB PD specification and the proprietary protocol. The proprietary protocol is independent of the USB PD specification and is supported by the battery pack 20 and an external charger (not shown) dedicated thereto. Through the proprietary protocol, the battery pack 20 may receive a voltage range set in the USB PD 2.0 specification from the USB Type-C interface 26, i.e. the voltage with other levels other than 5V-20V. Specifically, the proprietary protocol supports that the DC voltage within range of 4.5V to 60V is transmitted to the battery pack 20 from the external device or is transmitted to the external device from the battery pack 20. Particularly, the proprietary protocol supports the voltage delivery of 36V, 48V and 54V.

The above proprietary protocol uses the standard USB Type-C interface and the pin definition, but is not necessarily supported by other commercially available USB Type-C. However, since the battery pack 20 supports both the USB PD specification and the proprietary protocol, when the battery pack 20 is connected to the external power supply device, both of them may agree to use a power delivery standard that is most appropriate and supported by both parties at the same time. For example, if both the battery pack 20 and the external power supply device support the above proprietary protocol, then the two parties transmit the power through the proprietary protocol to achieve the charging with highest efficiency. If the external power supply device does not support the proprietary protocol and only supports the standardized USB PD specification, the battery pack 20 and the external power supply device may charge the battery pack in the voltage conformed to the USB PD specification. The agreement process is automatic and does not require user intervention.

Please refer to FIG. 2, according to another embodiment of the present invention, a battery charger for charging a battery pack of a power tool is provided. The battery charger 40 includes a housing 42, which accommodates a necessary power delivery component, such as transformer, voltage converter, battery monitoring module, etc. A physical interface 44 that allows detachably mounting the battery pack of the power tool (not shown) is provided on one side of the housing 42. The physical interface 44 has certain geometrical features that allow the battery pack to be securely mounted on the battery charger 40 and the metal terminal (not shown) for electrically connecting the battery charger 40 to the battery pack exists on the physical interface 44. Additionally, the battery charger 40 may be connected to a power line 48, such that the battery charger 40 may receive an alternating current voltage from the mains electricity. A USB Type-C port 46 similar to the USB Type-C port described in FIG. 1 is configured on the housing 42. The battery charger 40 further a USB PD controller (not shown), and the USB PD controller is connected to other power delivery component in the battery charger 40. At the same time, the battery charger 40 further includes a control with a proprietary protocol, and the control with the proprietary protocol is connected to other power delivery component in the battery charger 40. The controller may be a component independent the USB PD controller or a unique controller compatible with both the USB PD specification and the proprietary protocol. The proprietary protocol described herein is the same as the proprietary protocol described above for the battery pack 20.

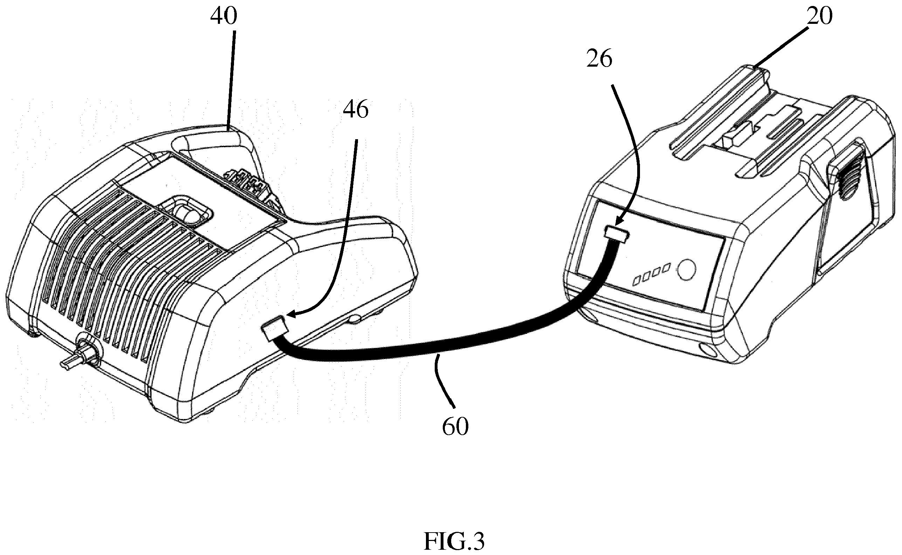

The use of the device described above is described now. FIG. 3 shows how the battery pack 20 equipped with the USB Type-C interface 26 as shown in FIG. 1 is connected to the battery charger 40 with the USB Type-C interface 46 as shown in FIG. 2 for charging. A USB Type-C cable 60 is connected between the battery pack 20 and the battery charger 40. Regardless of whether the battery charger 40 is designed to be able to receive and charge the battery pack 20 using a dedicated physical interface, the battery charger 40 may charge the battery pack 20 by using the USB Type-C interface. As mentioned above, the battery charger 40 and the battery pack 20 may automatically use the best mode supported by the proprietary protocol and/or the USB PD specification to transmit the power.

The USB Type-C interface on battery pack 20 may also be used to implement other functions. For example, an internal control circuit (not shown) of the battery pack 20 may transmit useful information related to battery pack 20 (such as operation parameter or state thereof) to an external device connected to battery pack 20 through the USB Type-C interface, for example as a battery charger, power tools or battery diagnostic instrument. On the other hand, the USB Type-C interface on the battery pack 20 may be used to output the power stored in the battery pack 20, so as to charge the external device (not shown), such as a smartphone, a Walkman, an MP3 player, or a tablet computer. In this manner, the battery pack 20 is used as a mobile charging station. Particularly, if the external device supports any one of a number of different protocols, such as the above USB PD specification, the standard USB 1.1, the standard USB 2.0, or the proprietary protocol, the battery pack 20 may use the corresponding protocol to provide the power to the external device.

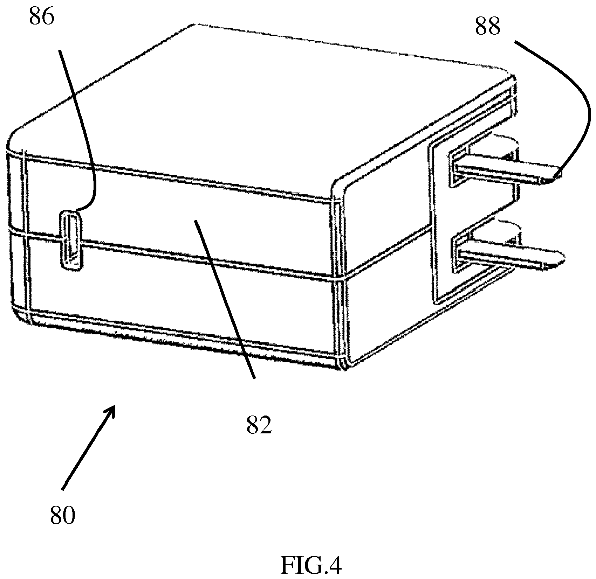

Please refer to FIG. 4, which shows another battery charger according to the present invention. It is different from the battery charger in FIG. 2 in that the charger 80 in FIG. 4 does not has the physical structure for receiving and connecting the battery pack of the power tool and also does not has the corresponding metal terminal. On the contrary, the only external output interface configured on the housing 82 of the charger 80 is a USB Type-C interface 86. It can be seen that the charger 80 has the same shape as a power adapter of a conventional notebook. The housing 82 has a plug that can be rotated and accommodated inside the housing 82 is used to plug into a mains electricity outlet. The internal structure and operating principle of the charger 80 are similar to those of the charger in FIG. 2, and the description thereof is omitted.

Accordingly, the exemplary embodiments of the present invention have been fully described above. Although the description thereof relates to particular embodiments, it should be apparent to those skilled in the art that the present invention may be practiced through the change of specific details. Accordingly, the present invention should not be construed as limited to the embodiments set forth herein. Although the present invention has been shown and described in detail in the drawings and foregoing description, the present invention should be construed as illustrative and not restrictive, and it should be understood that the present invention shows and describes only exemplary embodiments in any manner and do not limit the scope of the invention. It should be understood that any of the features described herein may be used with any of the embodiments. The illustrative embodiments do not exclude other embodiments that are not in the art or described herein. Accordingly, the present invention further provides an embodiment including a combination of one or more of the above illustrative embodiments. Modifications and variations of the present invention set forth herein may be made without departing from the spirit and scope of the present invention.

In the above exemplary embodiment, a particular battery charger is designed to use with the battery pack of the power tool. However, those skilled in the art should be understood that other types of power supplies may also be used to charge a battery pack of the power tool equipped with the USB Type-C interface as long as such a power supply may provide a desired voltage/current. For example, the power adapter made for notebook, tablet computer, smartphone, or any other consumer electronic device may also be used to charge the battery pack of the power tool.

The USB Type-C interface shown in FIG. 1 and FIG. 2 is in the form of a female interface at some position in the battery pack or the battery charger. However, those skilled in the art should be understood that the USB Type-C interface may be an interface with other type, such as a male connector, or a cable that is connected in a fixed manner, wherein one end thereof is connected to a battery pack or a battery charger and the other end thereof has a plug.

The position of the USB Type-C interface on the battery pack or battery charger may be easily designed on any part of their housing as long as the user may connect conveniently.

The number of USB Type-C interface on the battery charger/battery pack may be one or more than one, so as to support further applications. For example, in the case of multiple USB Type-C interfaces, the battery pack may simultaneously charge two or more smartphones.

## Claims

1. A battery pack, comprising a housing and a plurality of battery units inside the housing, wherein the battery pack further comprises a USB Type-C interface on the housing.

2. The battery pack according to claim 1, wherein the USB Type-C interface is electrically connected to the plurality of battery units, such that the plurality of battery units are suitable to be charged by receiving an external power through the USB Type-C interface.

3. The battery pack according to claim 2, wherein the USB Type-C interface is compatible with USB Power Delivery specification.

4. The battery pack according to claim 3, wherein the USB Type-C interface is adapted to supply a power within a voltage range of 5V to 20V.

5. The battery pack according to claim 2, wherein the USB Type-C interface uses a proprietary protocol to transmit a power and the proprietary protocol allows the power with a voltage other than a range of 5V to 20V to be transmitted by the USB Type-C interface.

6. The battery pack according to claim 3, wherein the USB Type-C interface is adapted to supply a power within a voltage range of 4.2V to 60V.

7. The battery pack according to claim 1, wherein the USB Type-C interface is configured to communicate with an external device, so as to transmit an operation parameter and/or state of the battery pack.

8. The battery pack according to claim 1, wherein the battery pack is configured to use with a power tool and further comprises a battery terminal electrically connected to the power tool.

9. A battery charger, comprising a socket for receiving a power tool battery pack, wherein the battery charger further comprises a USB Type-C interface.

10. The battery charger according to claim 9, wherein the USB Type-C interface is compatible with USB Power Delivery specification.

11. The battery charger according to claim 10, wherein the USB Type-C interface is adapted to supply a power within a voltage range of 5V to 20V.

12. The battery charger according to claim 9, wherein the USB Type-C interface uses a proprietary protocol to transmit a power and the proprietary protocol allows the power with a voltage other than a range of 5V to 20V to be transmitted by the USB Type-C interface.

13. The battery charger according to claim 12, wherein the USB Type-C interface is adapted to supply a power within a voltage range of 4.2V to 60V.

14. A battery pack kit for a power tool, comprising a battery pack according to claim 1 and a battery charger according to claim 9.
